# EUROPÄISCHE PATENTSCHRIFT

(11) **EP 0 271 805 B1**
(45) Veröffentlichungstag und Bekanntmachung des Hinweises auf die Patenterteilung: **26.04.1995**
(21) Anmeldenummer: 87118139.2
(22) Anmeldetag: 08.12.1987
(51) Int. Cl.: H04B 1/66, H04H 1/00

(54) **System zur Übertragung**
Transmission system
Système de transmission

(30) Priorität: 17.12.1986 DE 3642982
(43) Veröffentlichungstag der Anmeldung: 22.06.1988
(73) Patentinhaber: Deutsche Thomson-Brandt GmbH, 78003 Villingen-Schwenningen (DE)
(72) Erfinder: Klank, Otto, Dipl.-Ing., D-3160 Lehrte (DE); Schröder, Ernst, Dipl.-Ing., D-3000 Hannover 51 (DE); Voessing, Walter, Dipl.-Ing., D-3015 Wennigsen (DE)

(56) Entgegenhaltungen:
- EP-A- 0 144 770
- EP-A- 0 193 143
- DE-B- 2 855 395
- US-A- 4 567 591

## Beschreibung

Die Erfindung betrifft ein System zur Übertragung und zum Empfang digitalisierter Audiosignale, insbesondere über Satelliten, bei dem Datenfolgen in Rahmen zeitlich nacheinander angeordnet sind.

Aus der Informationsbroschüre des Bundesministers für Forschung und Technologie "Digitaler Hörfunk über Rundfunksatelliten", 2., geänderte Auflage, Herausgeber: der Bundesminister für Forschung und Technologie (BMFT), Heinemannstr. 2, D 5300 Bonn 2, Redaktion Dipl.-Ing. P. Treytel, ist ein Rahmenformat bekannt, bei dem für eine Übertragung auf einem Satellitenabschnitt 16 in paralleler Form anliegende Stereoprogramme in ein geeignetes serielles Rahmenformat gebracht werden (Seite 106, Absatz 3.4. Rahmenformat). Bild 47 auf Seite 77 zeigt das Blockschaltbild der gesamten Multiplex- und Modulationseinrichtung für die Sendestelle Usingen. Auf der Seite 78 sind unter Punkt 1.3. die technischen Daten angegeben, wobei die Zahl der Tonkanäle mit 16 Stereo- bzw. 32 Monokanälen angegeben ist.

In EP-A-0144770 ist ein Satelliten-Übertragungssystem beschrieben, bei dem wahlweise PCM-Werte mit 16Bit-Wortlänge oder datenreduziert codierte Werte mit 8Bit-Wortlänge übertragen werden, wobei für beide Übertragungsarten der gleiche Fehlerschutz vorgesehen ist. Bei solchen Übertragungs-Systemen ergibt sich aber im Fall von nicht korrigierbaren Fehlern eine ungleiche empfängerseitige Signalqualität, weil bei datenreduziert codierten Werten ein Concealment die Signalqualität deutlich verschlechtert oder nicht sinnvoll möglich ist.

Der Erfindung liegt die Aufgabe zugrunde, die Übertragung und den Empfang zu verbessern. Diese Aufgabe wird gemäß der Merkmale des Patentanspruchs 1 gelöst. Vorteilhafte Weiterbildungen der Erfindung sind in Unteransprüchen genannt.

In der Offenlegungsschrift DE-OS-35 06 912 ist ein Verfahren zur Übertragung eines digitalen Audiosignals beschrieben. Dabei wird das Signal vor der Übertragung in ein das Kurzzeitspektrum darstellendes Signal umgewandelt und für den Hörer irrelevante Anteile des Signales werden weniger gewichtet oder unterdrückt. Dieses Verfahren wird auf die Modulationseinrichtung des Satellitenrundfunks und auf die Demodulationseinrichtungen im Empfänger angewandt. Dabei wird die Anzahl der übertragenen Audiosignale auf etwa das Doppelte erhöht.

Zum besseren Verständnis der Erfindung ist nachfolgend ein Ausführungsbeispiel anhand von Figuren erläutert.

Es zeigen
- Fig. 1: ein Übersichtsblockschaltbild eines Nachrichtenkanals,
- Fig. 2: ein Blockschaltbild eines Senders,
- Fig. 3: ein Blockschaltbild eines Empfängers,
- Fig. 4: ein Verfahren zur Datenreduzierung bei digitalisierten Audiosignalen,
- Fig. 5: ein weiteres Blockschaltbild eines Senders,
- Fig. 6: ein Blockschaltbild eines Tuners und
- Fig. 7: ein weiteres Blockschaltbild eines Empfängers.

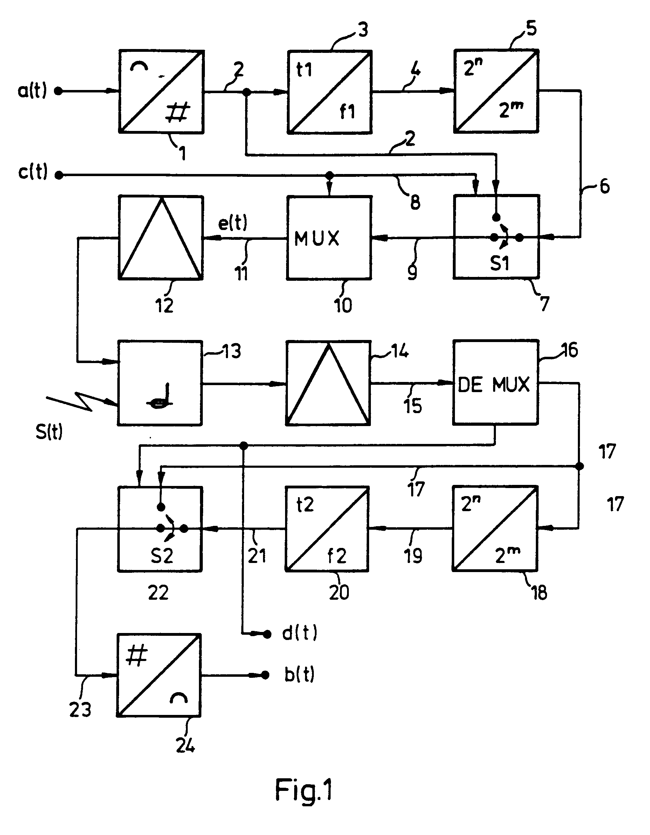

Fig. 1 zeigt ein Übersichtsblockschaltbild eines Nachrichtenkanals für ein Audiosignal a(t). Das Audiosignal a(t) wird in einem Analog-Digital-Wandler 1, im folgenden ADU (Analog-Digital-Umsetzer) genannt, in ein digitales Signal umgesetzt. Das Digital-Signal gelangt über mehradrige Leitungen 2 zu einer Codetransformationsschaltung oder -einrichtung 3, im folgenden Transformator genannt. Der Transformator 3 transformiert das digitale Audiosignal aus dem Zeitbereich in einen Frequenzbereich, das heißt, der Transformator 3 wandelt das digitalisierte Audiosignal in ein das Kurzzeitspektrum darstellende Signal um. Anteile des Signales, das das Kurzzeitspektrum darstellt, werden auf Basis psychoakustischer Gesetzmäßigkeiten in ihrer Darstellungsgenauigkeit verschieden gewichtet. Digitale Audiosignale im Frequenzbereich werden als Spektralwerte bezeichnet. Diese Spektralwerte werden über eine Leitung 4 zu einem Codeumsetzer 5 weitergeleitet. Der Codeumsetzer 5 versieht die digitalen Spektralwerte mit zusätzlichen Bits, diese Vorauscodierung ermöglicht im Empfangsteil eine Fehlerkorrektur. Vom Codeumsetzer 5 gelangen die mit Redundanz versehenen Spektralwerte über eine Leitung 6 zu einem Schalter 7. Der Schalter 7 schaltet zwischen zwei Signalwegen um. Einmal kann das digitale Audiosignal direkt von dem Digital-Analog-Wandler 1 übertragen werden, oder das transformierte digitale Audiosignal wird übertragen. Der Schalter 7 wird über eine Steuerleitung 8 mit einem Steuersignal c(t) gesteuert. Vom Schalter 7 werden die digitalisierten Audiosignale oder die digitalisierten transformierten Audiosignale über eine Leitung 9 zu einem Multiplexer 10 weitergegeben. Im Multiplexer 10 werden das Signal c(t) und gegebenenfalls weitere Audiosignale hinzugesetzt. Mit c(t) wird einem Empfangsteil mitgeteilt, ob das digitalisierte Audiosignal oder das digitalisierte transformierte Audiosignal übertragen wird. Das Multiplexsignal e(t) wird über eine Leitung 11 zu einem Sender 12 gegeben. Im Sender 12 wird das Multiplexsignal moduliert. Vom Sender 12 geht das Rundfunksignal, im folgenden RF-Signal genannt, auf einen Nachrichtenübertragungskanal 13. Der Übertragungskanal 13 kann eine HF-Funkstrecke, ein Magnetband, ein Speicher oder ähnliches sein. Das RF-Signal wird bei der Übertragung von einem Störsignal S(t) beeinflußt. Vom Übertragungskanal 13 gelangt das RF-Signal zu einem Empfänger 14. Der Empfänger 14 demoduliert das RF-Signal und gibt ein dadurch erhaltenes Modulationssignal über eine Leitung 15 zu einem Demultiplexer 16 weiter. Der Demultiplexer 16 trennt das Modulationssignal in ein Basisband und ein Steuersignal d(t). Ist das Signal im Übertragungskanal 13 nicht gestört, so sind c(t) und d(t) identisch. Vom Demultiplexer 16 gelangt das Basisband über eine Leitung 17 zu einem zweiten Codeumsetzer 18. Der Codeumsetzer 18 überprüft die ankommenden Daten und trennt zusätzliche Bits und Informationssignal. Ist das gesendete Audiosignal durch S(t) gestört, versucht der Codeumsetzer 18, das durch die Störung S(t) gestörte Audiosignal wieder zu rekonstruieren. Einfache Störungsfehler werden in diesem Codeumsetzer 18 erkannt und das digitale transformierte Audiosignal wird wieder rekonstruiert. Schwierige Störungsfehler können nicht rekonstruiert werden und werden durch eine Concealmentschaltung verdeckt. Der Codeumsetzer 18 korrigiert Fehler bis zu einer bestimmten Anzahl pro Block, z.B. bis zu zwei, darüber hinaus und sicher bis zu einer Grenze von fünf Fehlern wird eine Fehlererkennung mit anschließendem Concealment (Ausmittlung über mehrere Abtastwerte) durchgeführt. Die Spektralwerte des digitalen Audiosignales, die am Ausgang des Codeumsetzers 18 anstehen, werden über eine Leitung 19 zum Rücktransformator 20 weitergegeben. Der Transformator 20 transformiert die Spektralwerte aus dem Frequenzbereich wieder zurück in den Zeitbereich. Vom Rücktransformator 20 werden die rücktransformierten digitalen Audiosignale über eine Leitung 21 zu einem Schalter 22 weitergegeben. Der Demultiplexer 16 entscheidet mit seinem Steuersignal d(t) in dem Schalter 22, ob ein übertragenes Audiosignal direkt vom Multiplexer abgegriffen wird, oder ob das übertragene Audiosignal noch über den Transformator 20 geschickt wird. Am Ausgang des Schalters 22 steht das Audiosignal in digitaler Grundform an. Vom Ausgang des Schalters 22 gelangt das Audiosignal über eine Leitung 23 zu einem Digital-Analog-Wandler 24, im folgenden DAU (Digital-Analog-Umsetzer) genannt. Am Ausgang des DAU 24 steht das analoge Audiosignal b(t) an. b(t) ist mit a(t) identisch, wenn die Transformation und Rücktransformation in dem Transformator 3 und in dem Rücktransformator 20 unterblieben ist und wenn das Signal im Übertragungskanal 13 nicht durch eine Störung S(t) gestört wurde. Ist das Audiosignal allerdings über die Transformation und Rücktransformationsschaltungen gelaufen, so sind in der Transformationsschaltung 3 für einen Hörer irrelevante und redundante Anteile des digitalen Audiosignals unterdrückt worden und so sind a(t) und b(t) unterschiedlich.

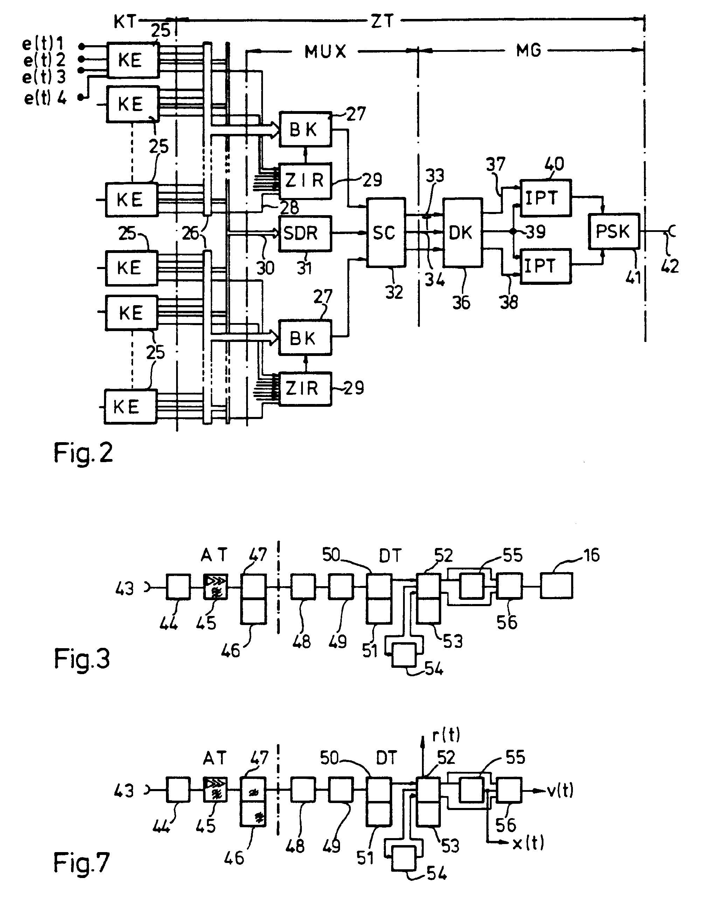

Fig. 2 zeigt das Blockschaltbild einer gesamten Multiplex-und Modulationseinrichtung für eine Sendestelle, das entspricht einem Sender 12. Für vier Monosignale e(t) steht eine Kanaleinheit 25 zur Verfügung. Die Monosignale e(t) sind digitalisierte Audiosignale oder digitalisierte transformierte Audiosignale. Eine Kanaleinheit 25 verarbeitet entweder zwei digitalisierte Audiosignale e(t), ein digitales Audiosignal und zwei transformierte digitale Audiosignale oder vier transformierte digitalisierte Audiosignale e(t). Nach der Verarbeitung der Signale e(t) stehen an den Ausgängen der Kanaleinheiten 25 zwei 14 Bit Codeworte für vier Monokanäle oder zwei Stereokanäle. Es existieren sechzehn Kanaleinheiten 25, je acht bilden einen Kanalteil. Über einen Datenbus 26 werden Daten zu Blockcodierern 27 übertragen. In den Blockcodierern 27 erfolgt eine BCH-Codierung der Tonsignale und das Multiplexen der von den acht Kanaleinheiten kommenden Tonsignale. Über Leitungen 28 wird ein Skalenfaktor an den ZI-Rahmenmultiplexer 29 weitergegeben. Der Skalenfaktor hat eine ähnliche Funktion wie bei einer Kompandierung und ordnet Abtastdatenworte bestimmten Pegelbereichen zu. (Siehe dazu Seite 19 der Informationsbroschüre.) Über einen Bus 30 werden V-Bits aus den Kanaleinheiten 25 an einen SD-Rahmenmultiplexer 31 weitergegeben, der Sonderdienste verarbeitet. Diese Sonderdienste zeigen an, ob das Signal e(t) zu einer Oper, Sportnachrichten, allgemeine Nachrichten usw. gehört. In einen Scramber/Hauptrahmenmultiplexer 32 werden aufeinanderfolgende Doppelblöcke verwürfelt, mit einem Synchronwort versehen und zu einem Hauptrahmen A′ bzw. B′ zusammengesetzt. Blockcodierer 27, ZI-Rahmenmultiplexer 29, SD-Rahmenmultiplexer 31 und der Hauptrahmenmultiplexer 32 bilden ein Multiplexgerät. Vom Hauptrahmenmultiplexer 32 gehen drei Leitungen 33 - 35 für einen Rahmen A′, einen Rahmen B′ und ein Taktsignal T zu einem Differenzcodierer 36. Über Leitungen 37 - 39 werden Signale für die Rahmen A˝, B˝ und das Taktsignal T′ an die beiden Impulsformertiefpässe 40 weitergegeben. In den beiden Impulsformern 40 werden unipolare NRZ-Signale in bipolare Signale umgewandelt und mit den Tiefpässen 40 werden diese Signale bandbegrenzt. Diese bandbegrenzten Bandsignale dienen als Modulationssignale für einen 4-PSK-Modulator 41. PSK steht für Phase Shift keying (Englisch) oder Phasenumtastung (Deutsch). Ein Quarzoszillator erzeugt einen erforderlichen 70 MHz Träger. In einem ZF-Ausgangsfilter des 4-PSK-Modulators 41 werden die bei der Modulation entstehenden Mischprodukte unterdrückt. Am Ausgang 42 des PSK-Modulators steht damit ein mit 70 MHz moduliertes PSK-Signal an. Das Modulationsgerät umfaßt den Differenzcodierer 36, die Impulsformertiefpässe 40 und den PSK-Modulator 41.

Fig. 3 zeigt einen Empfänger 14 für 4-PSK modulierte Signale. Am Eingang 43 stehen 4-PSK modulierte Signale an. Der Kanalwähler 44 wählt ein Empfangsband aus, z.B. das mit 70 MHz Trägerfrequenz, und gibt das Signal an einen Verstärker und Bandbegrenzer 45 weiter. Im Demodulator 47 werden Träger und Nutzsignal voneinander getrennt. Zur kohärenten Demodulation liefert der Trägerregerator 46 ein aus dem RF-Signal regeneriertes Trägersignal. Der Kanalwähler 44, der Verstärker und Bandbegrenzer 45, die Trägerregenerierung 46 und der Demodulator 47 bilden den Analogteil eines Empfängers. Am Ausgang des Analogteils stehen wieder zwei Bitströme, die den beiden im PSK-Modulator zusammengefügten Bitströme entsprechen, zur Verfügung. Zu den Bitströmen wird in einer Taktableitungsschaltung 48 ein zur vorgegebenen Bitfolge synchroner Takt erzeugt. Nach der Taktableitung stehen am Ausgang die Bitströme, die jedoch noch eine Differenzcodierung enthalten und außerdem je nach Einrastzustand des Trägeroszillators invertiert oder vertauscht und in einem Ausgang invertiert sein können. Sowohl diese Fehllagen als auch eine differentielle Codierung werden in dem sich anschließenden Differenzdecodierer 49 beseitigt, so daß an dessen Ausgang die Originalbitströme zur Verfügung stehen. Um die Originalbitströme zu demultiplexen, muß exakt in einem Synchronisierer 50 und Descrambler 51 synchronisiert und eine Rückverwürfelung durchgeführt werden und der Rahmenanfang aus den endlosen Datenströmen erkannt werden. Dann können mit Hilfe von Zählschaltung zu einem Signal e(t) zusammengehörende Bitgruppen von einem Demultiplexer mit Steuereinheit 52 ausgekoppelt, von einem Programmwähler 53 ausgewählt und weiter verarbeitet werden. Gleichzeitig wird der Skalenfaktor von einer Skalenfaktorerkennungsschaltung 54 berücksichtigt. In der Fehlerkorrekturschaltung 55 werden die zusätzlichen Bits, im folgenden Paritybits genannt, des äußeren Fehlercodes ausgewertet und Signale soweit möglich korrigiert. Treten Fehler auf, die nicht mehr korrigiert werden können, so werden diese Fehler in einer Concealmentschaltung 56 überdeckt. Mit Hilfe des Ausgangssignales der Skalenfaktorauswerteeinheit 54 wird das die Abtastwerte repräsentierende Signal wieder in den ursprünglichen Wertebereich gemäß dem übertragenen Skalenfaktor verschoben. Von der Concealmentschaltung 56 gelangen die Signale zu einem Demultiplexer 16.

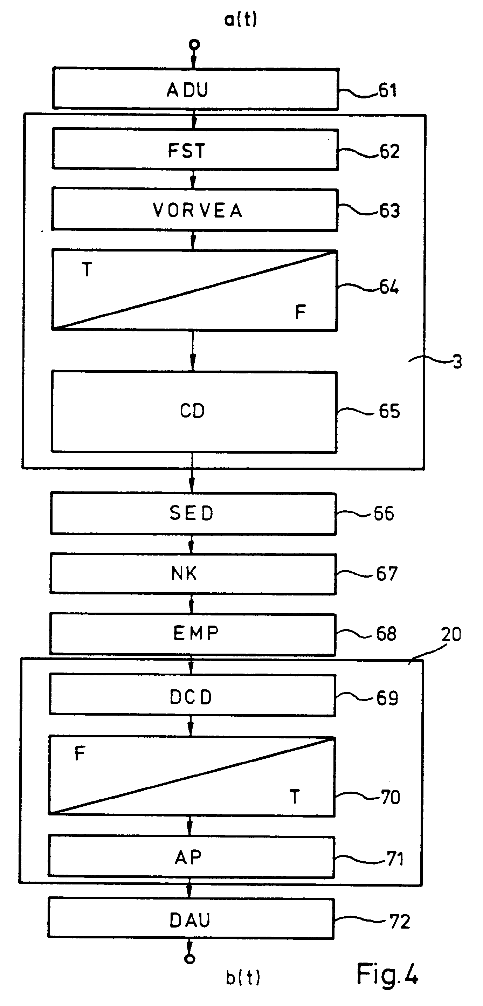

In Fig. 4 zeigt den Prozeßablauf des zur Datenreduktion der Audiosignale verwandten Verfahrens. Dabei wird das Analog-Signal a(t), das ein Audiosignal wie z.B. Sprache oder Musik darstellt, in der Stufe 61, das entspricht dem ADU 1, in ein entsprechendes digitales Audiosignal umgewandelt. In der Stufe 62 erfolgt durch zeitlich aufeinanderfolgende und überlappende Zeitfenster eine sogenannte Fensterung dieses Signales. Das Signal wird dabei in zeitlich aufeinanderfolgende Blöcke mit 1024 Abtastwerten/Block und mit je einer Dauer von 20ms/Block aufgeteilt, derart, daß jeweils das Signal eines Blockes für sich getrennt weiter bearbeitet werden kann. In der Stufe 63 erfolgt eine Vorverarbeitung des Signales, dabei werden plötzlich auftretende Schallereignisse berücksichtigt. (Siehe dazu DE-OS 35 06 912.0.) In der Stufe 64 wird jeweils das digitale Signal eines Zeitfensters oder eines Blockes durch eine Transformation in ein Frequenz-Spektrum umgesetzt. Am Ausgang der Stufe 64 steht also während der zeitlich aufeinanderfolgenden Blöcke jeweils ein Signal, das für die Dauer eines Zeitfensters oder Blockes die Spektralkomponenten des Signals über das gesamte Frequenzband darstellt. Die Stufe 64 bewirkt also die Umsetzung des Signals im Zeitbereich in das das Spektrum darstellende Signal im Frequenzbereich.

Das Signal von der Stufe 64 gelangt zum Coder 65. Hier erfolgt eine Codierung nach psychoakustischen Gesichtspunkten. Das bedeutet, daß Spektralkomponenten, die bei der Wiedergabe insbesondere aufgrund von Verdeckungseffekten ohnehin nicht wahrgenommen werden, bei der Codierung geringer gewichtet oder weggelassen werden. Eine derartige Verarbeitung des Kurzzeit-Spektrums ist möglich z.B. mit Hilfe eines Rechners. Die Stufen 62-65 entsprechen dem Transformator 3.

Das derart codierte Signal gelangt über einen weiteren Sender 66, der dem ersten Sender 12 entspricht, zum Nachrichtenkanal 67. Durch die erzielte Verringerung der mittleren Bitrate kann dieser Nachrichtenkanal entsprechend schmalbandig bemessen werden. Auf den Nachrichtenkanal 67 folgt der Empfänger 68, der im wesentlichen die zum Sender inversen Funktionen ausführt. Das Signal gelangt zunächst zu einem Decoder 69, der entsprechend dem Coder 65 die Decodierung bewirkt. In der Stufe 70 wird das so gewonnene, das Spektrum-darstellende Signal im Frequenzbereich wieder in ein digitales Signal im Zeitbereich umgesetzt. In der Stufe 71 wird das Signal wieder zu einem einheitlichen kontinierlichen digitalen Signal zusammengesetzt und die Vorverarbeitung der Stufe 63 berücksichtigt. Dann wird das Signal dem Digital/Analog-Wandler 72 zugeführt. Der Wandler 72 liefert wieder das Analogsignal b(t). Dieses Signal ist mit dem Signal a(t) nicht identisch, weil im Coder 65 bei der Codierung Spektral-Komponenten unterschiedlich gewichtet oder untrdrückt wurden., Der Unterschied zwischen den Analogsignalen b(t) und a(t) ist aber so, daß er bei der Wiedergabe vom Hörer nicht bemerkt wird. In dem Signal wird also lediglich Irrelevanz, für den Hörer unhörbare Information, beseitigt, um die notwendige Bitrate bei der Übertragung über den Nachrichtenkanal 67 zu verringern. Die Stufen 62-65 entsprechen dem Transformator 3, die Stufe 66 der Fig. 2, die Stufe 68 der Fig. 3 und die Stufen 69-71 dem Rücktransformator 20.

Der heutige Satellitenrundfunk hat bei der Übertragung 14 Bit/Abtastwert. Davon werden 11 Bit fehlergeschützt und 3 Bit bleiben ungeschützt.

Es wird vorgeschlagen, nur die geschützten 11 Bit zur Übertragung mit einem Datenreduktionsverfahren zu benutzen. Durch den schon vorhandenen Fehlerschutz kann dann der Schutz der reduzierten Daten geringer ausfallen.

In einem Mono-Kanal lassen sich so bei 32kHz Abtastfrequenz 11 Bit/Abttastwert übertragen. Verwendet man das Codierverfahren nach DE-OS 35 06 912, so reichen 4 Bit pro Abtastwert und Monokanal aus. Überträgt man ein codiertes Stereosignal (2×4bit) in einem ursprünglichen Monokanal (11 Bit), so bleiben weitere 3 Bit übrig, die für einen Fehlerschutz, im folgenden innerer Fehlercode genannt, verwendet werden können.

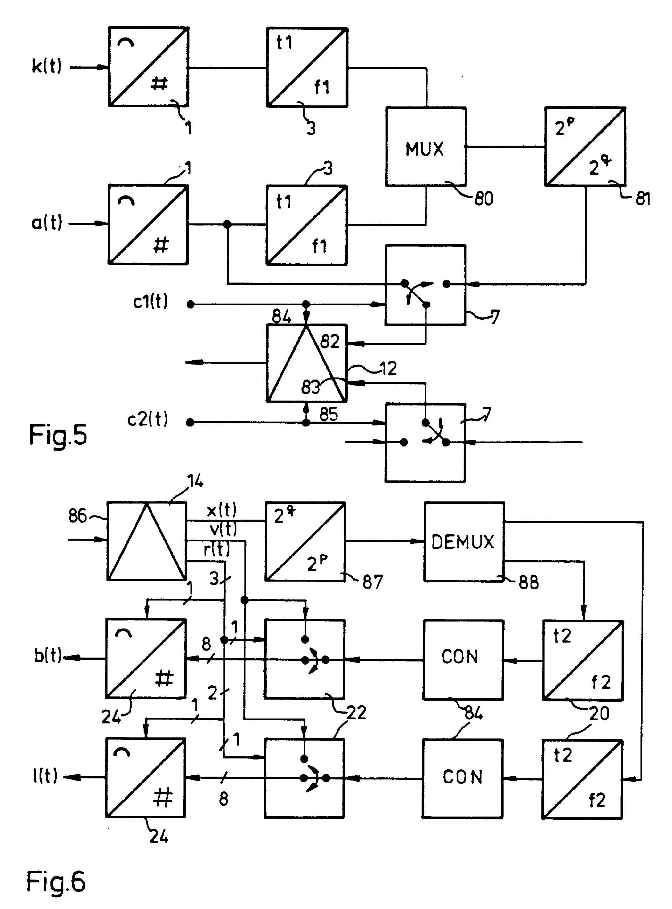

Fig. 5 zeigt ein weiteres Blockschaltbild eines Senders. Die Signale a(t) und k(t) werden auf zwei Signalwegen in den Analog-Digital-Wandlern 1 und Transformatoren 3 verarbeitet. Im Multiplexer 80 werden die beiden transformierten Signale gemultiplext und über eine Leitung zu einem Vorauscodierer 81 gegeben. Der Vorauscodierer 81 fügt einen inneren Fehlercode zu den transformierten Signalen hinzu. Dieser Code kann ein BCH-Code sein. Dieser Code ist z.B. erläutert in F.J. Furrer, Fehlerkorrigierende Blockcodierung für die Datenübertragung", Birkhäuser Verlag, 1981. Vom Vorauscodierer 81 führt ein Signalweg zu einem Umschalter 7, über den das vorauscodierte Signal zu einem Sender 12 gelangt. Der Schalter 7 ist durch ein Signal c1(t) gesteuert. Das Signal c1(t) zeigt dem Sender 12 an, ob zwei gemultiplexte transformierte Signale oder ein digitales Signal vom Schalter 7 den Sender 12 erreichen. Das Steuersignal c1(t) wird als Sonderdienstbit in den Datenstrom eingefügt und von einem Empfänger erkannt. Siehe dazu DE-OS-36 10 398.5, die am 01.10.87 veröffentlicht wurde. Das Signal a(t) wird in dem Analog-Digitalwandler 1 digitalisiert und gelangt über einen Signalweg zum Schalter 7. Der Sender 12 kann als eine Kanaleinheit 25 ausgebildet sein und entweder insgesamt vier transformierte Signale, zwei digitale Signale oder ein digitales Signal und zwei transformierte Signale übertragen. Ein Steuersignal c2(t) teilt dem Sender 12 mit, ob das am anderen Eingang des Senders 12 anstehende Signal von einem weiteren Schalter 7 ebenfalls zwei transformierte oder ein digitales Signal aufweist. In dem Sender 12 wird ein äußerer Fehlercode hinzugesetzt. Der Sender 12 weist vier Eingänge auf. Ein Eingang für ein Steuersignal c1(t), ein Eingang für das Steuersignal c2(t) und zwei Eingänge für digitalisierte Audiosignale. Die Schaltung an den Eingängen 82 und 84 ist doppelt vorhanden, die zweite Schaltung geht auf die Eingänge 83 und 85, so daß insgesamt vier Digital-Analogwandler 1, vier Transformatoren 3, zwei Multiplexer 80, zwei Vorauscodierer 81 und zwei Schalter 7 vorhanden sind.

Fig. 6 zeigt ein Blockschaltbild eines Tuners. Am Eingang 86 des Empfängers 14 steht dabei ein Signal an, das im Empfänger 14 demoduliert, descrambled und demultiplext wird. An den Ausgängen des Empfängers 14 stehen dann Signale x(t), v(t) und r(t) an. Das Signal x(t) ist ein in einen Sender transformiertes Signal, das im Tuner zu einer Korrekturschaltung 87 weitergeleitet wird. Die Fehlerkorrekturschaltung 87 verwendet den inneren Code, um eine Fehlerkorrektur durchzuführen. Nach der Fehlerkorrektur gelangt das fehlerkorrigierte Signal zu einem Demultiplexer 88. Der Demultiplexer 88 demultiplext das fehlerkorrigierte Signal und gibt zwei Signale zu zwei Rücktransformierern 20 weiter. Von den beiden Rücktransformierern 20 gelangen die rücktransformierten Signale zu Concealmentschaltungen 84. Von den Concealmentschaltungen 84 gehen jeweils zwei Leitungen zu Schaltern 22. Die Schalter sind synchron geschaltet und geben beide in einer Stellung den Weg zwischen den Concialmentschaltungen 84 und den DAUs 24 frei. An den DAUs 24 kann ein Monosignal b(t) oder ein Monosignal 1(t) abgegriffen werden. Beide DAUs 24 zusammen liefern ein Stereosignal mit den Signalen b(t) oder 1(t). Der Signalweg vom Fehlerkorrekturschalter 87 bis zu den Schaltern 22 verarbeitet zwei transformierte Signale, die in diesem Weg rücktransformiert werden. Nicht transformierte Signale werden über eine Leitung mit dem Signal v(t) zu den Schaltern 22 weitergegeben. Sind die Signale nicht transformiert, so werden diese Schalter in die andere Stellung gebracht, so daß das Signal v(t) vom Empfänger 14 über die Schalter 22 zu den DAUs 24 gelangt. Die Trennung des Signales v(t) in die beiden Ausgangssignale b(t) und 1(t) geschieht mit den Steuersignalen r(t). Der Empfänger 14 gibt drei Steuersignale r1(t), r2(t) und r3(t) aus, von denen zwei, jeweils eins, r1(t) und r2(t), für jeden der zwei DAUs 24 diese DAUs 24 taktet. Das digitale Audiosignal v(t) ist gemultiplext und wird in den beiden DAUs 24 getrennt. Beide Signale b(t) und l(t) sind gemultiplext in dem Signal v(t) vorhanden. Je nachdem, wann die DAUs 24 getaktet werden, gelangt jeweils nur das Signal b(t) oder l(t) an den Ausgängen der DAUs 24. Das Steuersignale r3(t) schaltet die beiden Schalter 22.

Fig. 7 zeigt das Blockschaltbild eines Empfängers und die Ausgänge der Signale x(t), v(t) und r(t). Das Signal x(t) wird zwischen der Fehlerkorrekturschaltung 55 und der Concealmentschaltung 56 abgegriffen. Die Fehlerkorrekturschaltung 55 nutzt den äußeren Code aus, um eine Fehlerkorrektur durchzuführen. Nach der Ausnutzung des äußeren Codes wird an der Fehlerkorrekturschaltung das Signal x(t) abgegriffen. Nach der Concealmentschaltung 56 wird das gemultiplexte Signal v(t) ausgegeben. Der Demultiplexer und Steuereinheit 52 gibt Steuersignale r(t) aus, die zur Steuerung der Schalter 22 und der DAUs 24 dienen.

## Patentansprüche

1. Verfahren zur Übertragung/Speicherung und zum Empfang oder zur Wiedergabe digitalisierter Audiosignale (a(t), b(t)), wobei diese Audiosignale
mit Hilfe von Abtastwerten (v(t)) mit fester Wortlänge und/oder
datenreduziert codiert mit Hilfe von codierten Werten (x(t)) mit im Mittel reduzierter Wortlänge
repräsentiert werden und ihnen ein äußerer Fehlerschutz zugeordnet ist, wobei im Fall datenreduziert codierter Audiosignale diese in ein das Kurzzeit-Spektrum darstellendes Signal transformiert werden, dessen Anteile bei der Codierung (65) auf Basis psycho-akustischer Gesetzmäßigkeiten in ihrer Darstellungsgenauigkeit verschieden gewichtet werden und wobei:
- die Datenfolgen der Audiosignale sind in Rahmen angeordnet;
- in die Rahmen sind eine Anzahl von Audiosignalen mit den Abtastwerten fester Wortlänge und/oder eine entsprechend verdoppelte Anzahl der codierten Werte eingefügt;
- ein in den übertragenen Datenstrom eingefügtes Steuersignal (c(t)) steuert (22) einen Empfänger oder ein Wiedergabegerät so, daß entsprechend Audiosignale mit Abtastwerten fester Wortlänge oder die codierten Werte ausgewertet werden;
- die mittlere Wortlänge der codierten Werte ist kleiner als die Hälfte der festen Wortlänge;
- der dadurch nicht belegte Anteil der festen Wortlänge dient für einen zusätzlichen, inneren Fehlerschutz für die codierten Werte.

2. Verfahren nach Anspruch 1, **dadurch gekennzeichnet**, daß nur höherwertige Bits der Abtastwerte mit fester Wortlänge (v(t)) mit dem äußeren Fehlerschutz versehen sind.

3. Verfahren nach Anspruch 1 oder 2, **dadurch gekennzeichnet**, daß jeweils mehrere Audiosignale mit Abtastwerten fester Wortlänge (v(t)) und/oder mit den codierten Werten (x(t)) von einem Blockcodierer (27) gemeinsam codiert werden und daß bis zu vier Audiosignale (e(t)) mit den codierten Werten in einer Kanaleinheit (25) kombiniert verarbeitet werden.

4. Verfahren nach einem oder mehreren der Ansprüche 1 bis 3, **dadurch gekennzeichnet**, daß die Daten von aufeinanderfolgenden Doppelblöcken verwürfelt (32) sind.

5. Verfahren nach Anspruch 4, **dadurch gekennzeichnet**, daß die aufeinanderfolgenden Doppelblöcke mit Synchronworten versehen und zu einem Hauptrahmen (A′, B′) zusammengesetzt sind.

6. Verfahren nach einem oder mehreren der Ansprüche 3 bis 5, **dadurch gekennzeichnet**, daß die Audiosignale in den Blockcodierern (27) BCH-codiert werden.

7. Verfahren nach einem oder mehreren der Ansprüche 1 bis 6, **dadurch gekennzeichnet**, daß empfangs- bzw. wiedergabeseitig nicht korrigierbare Fehler in den Audiosignalen durch Concealment verdeckt werden.

8. Verfahren nach einem oder mehreren der Ansprüche 1 bis 7, **dadurch gekennzeichnet**, daß die Audiosignale Rundfunksignale sind, insbesondere Satelliten-Rundfunksignale.

9. Verfahren nach Anspruch 8, **dadurch gekennzeichnet**, daß die Rundfunksignale PSK-moduliert sind.

## Claims

1. A method for the transmission/storage and reception or playback of digitalised audio signals (a(t), b(t)), where these audio signals are represented with the aid of sample values (v(t)) of fixed word length and/or in data-reduced coded form with the aid of coded values (x(t)) with on average reduced word length and said audio signals are assigned an external error protection, where in the case of audio signals coded in data-reduced form these are transformed into a signal which represents the short-term spectrum and the components of which, in the coding stage (65), are differently weighted in their representation accuracy on the basis of psycho-acoustic laws and where
- the data sequences of the audio signals are arranged in frames;
- a number of audio signals with the sample values of fixed word length and/or a correspondingly doubled number of the coded values are inserted into the frames;
- a control signal (c(t)) inserted into the transmitted data stream controls (22) a receiver or a playback device so that accordingly audio signals with sample values of fixed word length or the coded values are analysed;
- the average word length of the coded values is smaller than half the fixed word length;
- the thus non-allocated part of the fixed word length serves for an additional, internal error protection for the coded values.

2. A method as claimed in Claim 1, characterised in that only higher-value bits of the sample values of fixed word length (v(t)) are provided with the external error protection.

3. A method as claimed in Claim 1 or 2, characterised in that a plurality of audio signals with sample values of fixed word length (v(t)) and/or with the coded values (x(t)) are in each case commonly coded by a block coder (27) and that up to four audio signals (e(t)) with the coded values are processed in combined form in a channel unit (25).

4. A process as claimed in one or more of Claims 1 to 3, characterised in that the data items of consecutive double blocks are scrambled (32).

5. A method as claimed in Claim 4, characterised in that the consecutive double blocks are provided with synchronising words and are combined to form a main frame (A′, B′).

6. A method as claimed in one or more of Claims 3 to 5, characterised in that the audio signals are BCH-coded in the block coders (27).

7. A method as claimed in one or more of Claims 1 to 6, characterised in that at the receiving end and playback end non-correctable errors in the audio signals are masked by concealment.

8. A method as claimed in one or more of Claims 1 to 7, characterised in that the audio signals are broadcast signals, in particular satellite broadcast signals.

9. A method as claimed in Claim 8, characterised in that the broadcast signals are PSK-modulated.

## Revendications

1. Procédé de transmission/enregistrement et de réception/reproduction de signaux audio numérisés (a(t), b(t)), ces signaux audio étant représentés à l'aide de valeurs échantillonnées (v(t)) à longueur de mot fixe et/ou codés par réduction de données à l'aide de valeurs codées (x(t)) éyant en moyenne des longueurs de mots réduites, une protection externe contre les erreurs leur étant affectée; dans le cas de signaux audio codés par réduction de données, ceux-ci étant transformés en signal représentant le spectre instantané dont les composantes, lors du codage (65), sont pondérées différemment sur la base de lois psychoacoustiques et:
- les séquences de données des signaux audio étant agencées en trame;
- un nombre de signaux audio avec les valeurs échantillonnées de longueur de mot fixe et/ou un nombre double correspondant de valeurs codées étant insérés dans les trames;
- un signal de commande (c(t)) inséré dans le flux de données transmis commandant (22) un récepteur ou un appareil de reproduction de telle manière que, selon le cas, des signaux audio à valeurs échantillonnées de longueur de mot fixe ou les valeurs codées sont exploitées;
- la longueur de mot moyenne des valeurs codées étant plus petite que la moitié de la longueur de mot fixe;
- la part non occupée de la longueur de mot fixe étant utilisée pour une protection interne contre les erreurs pour les valeurs codées.

2. Procédé selon la revendication 1, caractérisé en ce que seuls les bits les plus significatifs des valeurs échantillonnées à longueur de mot fixe (v(t)) bénéficient de la protection externe contre les erreurs.

3. Procédé selon la revendication 1 ou 2, caractérisé en ce que plusieurs signaux audio à valeurs échantillonnées de longueur de mot fixe (v(t)) et/ou à valeurs codées (x(t)) sont toujours codés ensemble par un codeur de blocs (27) et en ce que jusqu'à quatre signaux audio (e(t)) à valeurs codées sont traités ensemble dans une unité de canaux (25).

4. Procédé selon l'une ou plusieurs des revendications 1 à 3, **caractérisé en ce** que les données de blocs doubles consécutifs sont brouillées (32).

5. Procédé selon la revendication 4, **caractérisé en ce** que les blocs doubles consécutifs sont affectés de mots de synchronisation et sont assemblés en une trame principale (A′, B′).

6. Procédé selon l'une ou plusieurs des revendications 3 à 5, **caractérisé en ce** que les signaux audio sont soumis à un codage BCH dans les codeurs de blocs (27).

7. Procédé selon l'une ou plusieurs des revendications 1 à 6, **caractérisé en ce** que les erreurs impossibles à corriger côté réception ou reproduction sont occultés par masquage dans les signaux audio.

8. Procédé selon l'une ou plusieurs des revendications 1 à 7, **caractérisé en ce** que les signaux audio sont des signaux de radiodiffusion, en particulier des signaux de radiodiffusion par satellite.

9. Procédé selon la revendication 4, **caractérisé en ce** que les signaux de radiodiffusion sont soumis à une modulation PSK.
